# EUROPÄISCHE PATENTSCHRIFT

(11) **EP 1 931 004 B1**
(45) Veröffentlichungstag und Bekanntmachung des Hinweises auf die Patenterteilung: **11.08.2010**
(21) Anmeldenummer: 07014419.1
(22) Anmeldetag: 23.07.2007
(51) Int. Cl.: H02G 3/18

(54) **Bodendose, insbesondere für elektrische Installationen**
Base plate, in particular for electric installations
Boîte à encastrer, en particulier pour installations électriques

(30) Priorität: 08.12.2006 CH 20002006
(43) Veröffentlichungstag der Anmeldung: 11.06.2008
(73) Patentinhaber: Feller AG, 8810 Horgen (CH)
(72) Erfinder: Krummenacher, Claudio, CH-8753 Mollis (CH); Zehnder, Rolf, CH-8912 Obfelden (CH)
(74) Vertreter: Fischer, Britta Ruth

(56) Entgegenhaltungen:
- EP-A- 1 253 691
- WO-A-2006/123386
- US-A- 3 199 713

## Beschreibung

Die Erfindung betrifft eine Bodendose, insbesondere für elektrische Installationen.

Bodendosen für elektrische Installationen sind bekannt. Sie umfassen Mittel zur Befestigung der Dose am Unterlagsboden sowie einen, im fertigen Fussboden in der Regel sichtbaren, Rahmen, der den Deckel der Bodendose aufnimmt. Bei geöffnetem Deckel sind die in der Bodendose enthaltenen elektrischen Anschlüsse (Netzspannungsdosen, Niederspannungsanschlüsse, Datenanschlüsse, Radio- und Fernsehkabelanschlüsse usw.) zugänglich. Der den Deckel aufnehmende Rahmen - und damit der Deckel - muss bei geschlossenem Deckel bündig mit der Oberfläche des Bodens angeordnet sein, damit die Bodendose beim Begehen oder Befahren des Bodens kein Hindernis darstellt. Da der Boden mit verschieden dicken Bodenbelägen fertig gestellt werden kann, z.B. mit Teppich, mit Parkett, mit Fliesen- oder Steinbelag, muss die Bodendose entsprechend anpassbar sein. Aus DE 20 2005 017 279 U1 ist ein Kabelkanal, der auch Steckdosen umfasst, mit höheneinstellbaren Füssen bekannt.

Der Erfindung liegt die Aufgabe zu Grunde eine verbesserte Bodendose zu schaffen. Diese soll insbesondere auf einfache Weise an den Fertigbodenbelag anpassbar sein.

Die Lösung der Aufgabe erfolgt mit einer Bodendose mit einem zur Befestigung am Unterlagsboden bestimmten Tragrahmen und einem den Dosendeckel aufnehmenden Rahmen, wobei der Rahmen im Tragrahmen angeordnet und über Einstellmittel mit diesem verbunden ist, und wobei die Einstellmittel in einer Losestellung die Höheneinstellung des Rahmens gegenüber dem Tragrahmen, die horizontale Verschiebung des Rahmens im Tragrahmen und die Verdrehung des Rahmens um seine vertikale Mittelachse erlauben und in einer Fixierstellung den Rahmen am Tragrahmen fixieren.

Auf diese Weise ist eine optimale Anpassung des Rahmens an den Fertigboden erzielbar.

Bevorzugterweise umfassen die Einstellmittel eine im Wesentlichen der Grundfläche des Rahmens entsprechende Grundplatte, welche in Losestellung schwimmend am Tragrahmen gehalten und in Fixierstellung reibschlüssig oder formschlüssig am Rahmen fixierbar ist. Diese Grundplatte ist dann über die Einstellmittel mit dem Rahmen verbunden.

Bevorzugt ist die Grundplatte durch Haltemittel der Einstellmittel in Vertikalrichtung am Tragrahmen festgelegt und in Losestellung von Fixiermitteln der Einstellmittel in Horizontalrichtung verschieblich und in der Horizontalebene verdrehbar. Dabei umfassen die Haltemittel bevorzugt in der Grundplatte angeordnete Hülsen, welche an einer Führung im Tragrahmen anliegen. Weiter ist es bevorzugt, dass die Hülsen ein Innengewinde aufweisen und Gewindebolzen als Nivelliermittel in den Hülsen vorgesehen sind, auf welchen der Rahmen aufliegt. Die Fixiermittel bilden dann mit den Gewindebolzen die Verbindung von Rahmen und Grundplatte. Die Fixation in der gewünschten Einstellposition des Rahmens erfolgt bevorzugterweise dadurch, dass die Einstellmittel Fixierschrauben umfassen, welche die Grundplatte in der Fixierstellung ausserhalb von deren Eckbereichen gegen den Rahmen ziehen und die Grundplatte verformen, derart, dass diese mindestens mit ihren Eckbereichen reibschlüssig am Tragrahmen angreift.

Im Folgenden werden Ausführungsbeispiele der Erfindung anhand der Zeichnungen näher erläutert. Dabei zeigt bzw. zeigen
Figur 1 einen Teil einer Bodendose in schaubildlicher Darstellung;
Figur 2 schematisch die Einbausituation einer Bodendose in einem Unterlagsboden;
Figur 3 schematisch die Einbausituation in einem Hohlraumboden;
Figuren 4-7 die Einstellungsmöglichkeiten der erfindungsgemässen Bodendose;
Figur 8 eine schaubildliche Darstellung gemäss Figur 1 mit voneinander gelösten Bauteilen; und
Figur 9 eine Detailansicht der Einstellmittel.

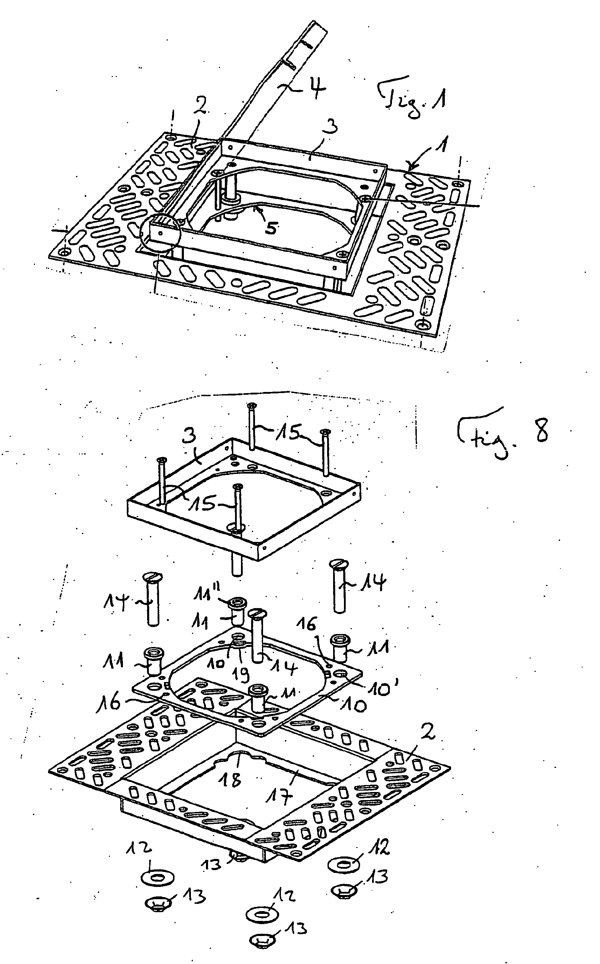

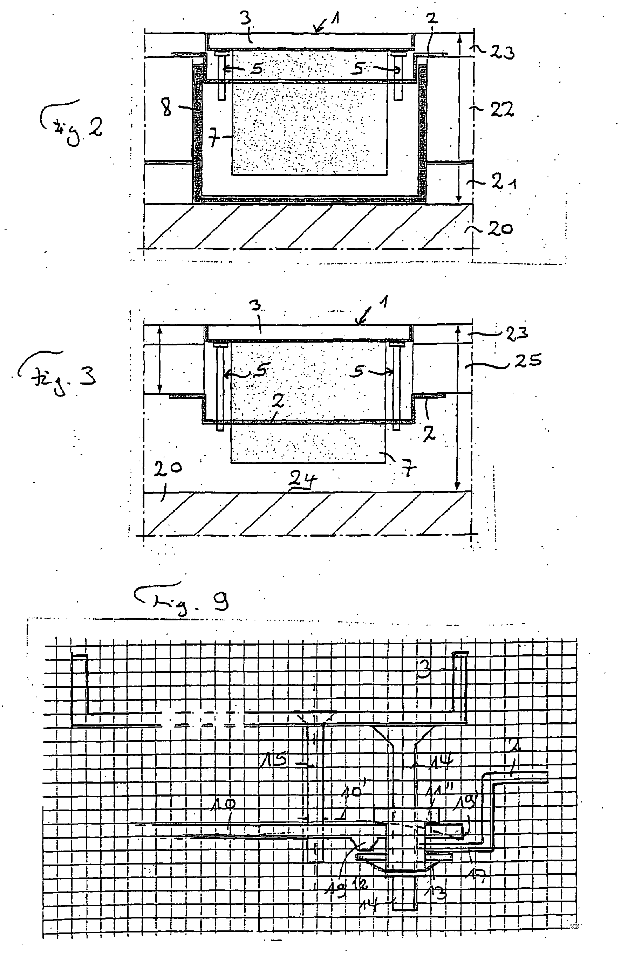

Figur 1 zeigt in schaubildlicher Darstellung Teile einer Ausführungsform einer erfindungsgemässen Bodendose 1. Dabei ist ein Tragrahmen 2 vorgesehen, welcher zur Befestigung der Bodendose am Unterlagsboden dient, was anhand der Figuren 2 und 3 näher erläutert wird. Über Einstellmittel, welche in Figur 1 nur generell mit 5 bezeichnet sind, ist der Rahmen 3 der Bodendose, welcher den in der Figur nur angedeuteten Deckel 4 trägt, mit dem Tragrahmen 2 verbunden. Der Deckel 4 ist in der geöffneten Stellung angedeutet, in welcher die in der Bodendose befindlichen Anschlüsse zugänglich sind. In der nicht dargestellten geschlossenen Deckelposition kommt der Deckel im Wesentlichen bündig mit der begehbaren oder befahrbaren Bodenoberfläche zu liegen und verschliesst die Dose, abgesehen von einem allfällig vorhandenen Kabelauslass. Die Bodendose ist insbesondere für elektrische Installationen vorgesehen und wird nachfolgend als solche beschrieben. Eine Bodendose gemäss der Erfindung kann aber auch für andere Installationen, wie Luftanschlüsse von Zentralstaubsaugern oder Wasseranschlüsse verwendet werden.

Figur 2 zeigt schematisch den Einbau einer derartigen Bodendose in einem Boden mit schwimmendem Unterlagsboden. Auf einem festen Untergrund 20, in der Regel einer Betondecke, ist eine Trennlage bzw. Dämmschicht 21 aufgebracht und der Unterlagsboden 22. Auf dessen Oberseite ist der Tragrahmen 2 befestigt. Dazu sind an diesem eine Vielzahl von Befestigungslöchern vorgesehen, wie dies in Figur 1 ersichtlich ist, wodurch eine Befestigung am Unterlagsboden mit üblichen Befestigungsmitteln möglich ist. Über die erwähnten und nachfolgend genauer beschriebenen Einstellmittel 5 ist der Rahmen 3 derart einstellbar, dass er im Wesentlichen bündig mit dem Fertigbodenbelag 23, der ein Fliesenbelag, ein Steinbelag, ein Teppichbelag, ein Parkettbelag oder ein anderer Bodenbelag sein kann, zu liegen kommt. Für diese Montageart weist die Bodendose bekannterweise in der Regel einen Einlasskasten 8 auf, welcher bereits anfänglich auf dem Untergrund montiert wird und in welchen die Kabelzuleitungsrohre führen. Ferner weist die Bodendose in der Regel einen Becher 7 auf, an welchem die dosenseitigen Anschlüsse montiert sind, so dass sie mit den in den Einlasskasten 8 geführten Kabeln verbindbar sind. Figur 3 zeigt schematisch die Montagesituation bei einem Hohlraumboden, wobei gleiche Bezugszeichen wiederum gleiche Elemente bezeichnen. Auf dem Untergrund 20 ist bei der Hohlraumbodenkonstruktion mit nicht dargestellten Mitteln eine Trägerplatte 25 beabstandet angeordnet, so dass ein Hohlraum 24 entsteht. An der Unterseite der Trägerplatte 25 ist der Tragrahmen 2 der Bodendose wieder mittels der Befestigungslöcher und passender Befestigungsmittel montiert. Über die Einstellmittel 5 ist der Rahmen 3 wiederum so einstellbar, dass er mit dem Bodenbelag 23 im Wesentlichen bündig zu liegen kommt. Für beide Montagesituationen ist ersichtlich, dass der Rahmen 3 Senkungen des Bodenbelages 23, welche auf einer Senkung der Bodenkonstruktion beruhen, bei der erfindungsgemässen Bodendose mitmacht. Durch solche Senkungen senkt sich auch der Tragrahmen 2 und der damit über die Einstellmittel 5 verbundene Rahmen 3 entsprechend der Bodensenkung.

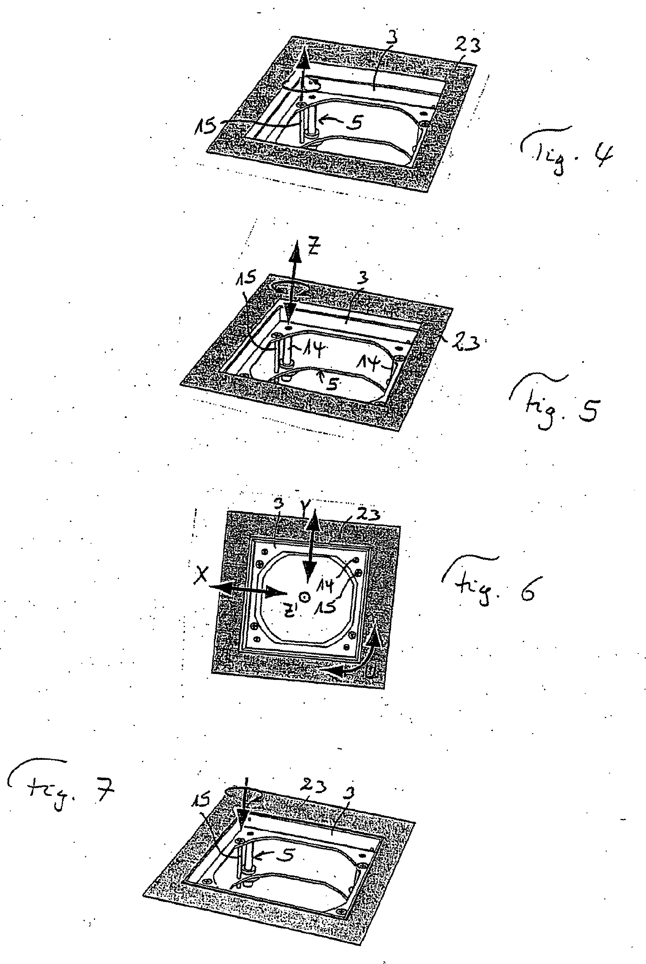

Die Figuren 4-7 zeigen schematisch die Einstellmöglichkeiten der erfindungsgemässen Bodendose, wobei diese in den Figuren ohne Becher und ohne Deckel dargestellt ist. Ersichtlich sind in diesen Bildern ein Teil des Bodenbelages 23 und der darin angeordnete Rahmen 3 sowie Teile der Einstellmittel 5. Die Tragrahmen und Rahmen verbindenden Einstellmittel umfassen im gezeigten bevorzugten Beispiel Fixierschrauben 15, welche zur Vornahme der Einstellung gelockert, aber nicht entfernt werden müssen; die Lockerung ist in Figur 4 mit den Pfeilen bei der mit Bezugszeichen 15 versehenen Fixierschraube angedeutet. Sind die Fixierschrauben 15, von denen in diesem Beispiel vier Stück vorgesehen sind, lose geschraubt worden, so kann mittels der Nivellierschrauben 14, von denen vier Stück in den Ecken der Bodendose vorgesehen sind, der Rahmen 3 in Vertikalrichtung nach oben und unten verstellt werden. Dies ist in Figur 5 mit dem runden Pfeil für die Drehung der Nivellierschrauben 14 und mit dem Pfeil Z für die Vertikalbewegung nach oben oder unten angedeutet. Da jede Ecke des Rahmens 3 mit einer eigenen Nivellierschraube 14 versehen ist, insbesondere darauf aufliegt, kann der Rahmen 3 auch an schief zum Unterlagsboden liegende Bodenbeläge in seiner Höhe angepasst werden, da jede Ecke des Rahmens separat höheneinstellbar ist. Figur 6 stellt dar, dass der Rahmen 3 mittels der Einstellmittel bei gelockerten bzw. gelösten Fixierschrauben 15 auch in seitlicher Richtung sowohl in X- wie in Y-Richtung verschoben werden kann. Damit kann der Rahmen 3 genau in die in dem Bodenbelag 23 ausgesparte Öffnung eingemittet werden, so dass der Abstand der Rahmenseitenwände zu den Seitenwänden der Öffnung überall gleich gross wird und somit die zu schliessende Fuge zwischen Bodenbelag und Rahmen überall gleich gross ist. Bei der erfindungsgemässen Bodendose kann ferner eine Schwenkung um die vertikale Mittelachse Z' erfolgen, was durch den Pfeil U dargestellt ist. So kann der Rahmen z.B. um ± 5 mm in X- oder Y-Richtung verstellbar sein und z.B. um 4° um die Z'-Achse gedreht werden. Nach der Anpassung des Rahmens 3 an den Bodenbelag 23 werden die Fixierschrauben gemäss Figur 7 wieder angezogen, was eine Fixierung des Rahmens 3 in der zuvor eingestellten Stellung ergibt. Diese Feinpositionierung des Rahmens kann durch den Bodenleger während dem Verlegen des Bodenbelages erfolgen. Zur weiteren Montage wird dann durch den Elektriker der Becher 7 z. B. von oben her im Rahmen 3 befestigt, nachdem die in die Bodenöffnung geführten Anschlusskabel an die Anschlussdosen des Bechers 7 angeschlossen worden sind. Nachfolgend wird der Deckel 4 am Rahmen befestigt. Diese Schritte werden hier nicht weiter erläutert.

Die Figuren 8 und 9 zeigen nun im Detail eine bevorzugte Ausführungsform der Einstellmittel 5. Diese umfassen im gezeigten Beispiel die Elemente 10-19'. Die Einstellmittel weisen dabei eine Grundplatte 10 auf, welche mit dem Tragrahmen 2 derart verbunden ist, dass die Grundplatte dauerhaft gegen eine Vertikalbewegung von dem Tragrahmen 2 weg gesichert ist und temporär so lösbar ist, dass die Verschiebebewegung und Drehbewegung möglich ist, welche durch die Fixiermittel 15 wieder unterbunden werden können. Letzteres gilt auch für die Höhenbewegung des Rahmens 3, welche gegenüber der Grundplatte 10 durch die Nivellierschrauben 14 erfolgt, wenn die Fixiermittel bzw. Fixierschrauben 15 gelöst sind. Im Einzelnen ist der Aufbau bevorzugterweise wie folgt: Die Grundplatte 10 liegt auf einem umlaufenden Flansch 17 im Tragrahmen 2 auf. Durch Löcher 10' in der Grundplatte hindurch sind Hülsen mit einem Kragen 11" gesteckt, welche an der Oberseite der Grundplatte 10 mit dem Kragen aufliegen. Die Hülsen 11 ragen durch Ausnehmungen 18 im Flansch 17 hindurch und sind an der Unterseite des Flansches z. B. mittels Unterlagsscheiben 12 und Federklemmringen 13 gesichert. An der Grundplatte ist vorzugsweise ein Absatz 19 vorgesehen, welcher zu einer ebenen Anlage der Unterlagsscheibe 12 am Flansch 17 und an der Grundplatte 10 führt, wie dies in Figur 9 am besten ersichtlich ist. Durch die federringgesicherten Hülsen 11 wird die Grundplatte 10 am Flansch 17 bzw. am Tragrahmen 2 derart befestigt, dass die Grundplatte gegen ein Entfernen in vertikaler Richtung vom Flansch weg gesichert ist. Die Befestigung mit den Federringen 13 erfolgt aber derart mit geringem Spiel, dass die Grundplatte 10 auf dem Flansch 17 in Horizontalrichtung bzw. in der Ebene der Flanschoberseite verschieblich ist und drehbar ist, entsprechend den an Hand der Figur 6 erläuterten Bewegungen des Rahmens. Zu diesem Zweck ist die von den Seitenwänden 2' begrenzte Öffnung im Tragrahmen 2, die den umlaufenden Flansch 17 aufweist, etwas grösser als die Seitenlänge der Grundplatte 10, so dass diese im Tragrahmen verschiebbar ist. Diese Verschiebung kann, wie vorstehend schon erwähnt, ca. 5 mm in X- und Y-Richtung betragen. Entsprechend ist die Ausnehmung 18 im Flansch 17 für die Hülsen 11 so dimensioniert, dass die Bewegung der Grundplatte möglich ist bzw. die Hülsen 11 erst am Ende dieser Bewegung am Rand der Ausnehmung 18 anstossen. Die gerundete Ausführung der Ausnehmung 18 ermöglicht ferner die Verdrehung der Grundplatte 10 um die vertikale Mittelachse Z', wie in Figur 6 gezeigt. Dabei bewegen sich die Hülsen 11 entsprechend in den gerundeten Ausnehmungen 18. Durch die geschilderte Verschiebbarkeit und Verdrehbarkeit der Grundplatte 10 bei gelöster Fixation der Einstellmittel wird somit die Bewegbarkeit des Rahmens 3, der mit der Grundplatte 10 verbunden ist, gemäss der Figur 6 bewirkt. Die Verbindung zwischen Grundplatte 10 und Rahmen 3 erfolgt dabei in dem gezeigten Beispiel durch die Fixationsmittel bzw. Fixierschrauben 15. Der Rahmen 3 liegt auf den Nivellierschrauben 14 auf, welche in dem gezeigten Beispiel in den mit Innengewinden 11' versehenen Hülsen 11 eingeschraubt sind. Bei gelösten bzw. gelockerten Fixationsschrauben 15 kann somit die Höhe des Rahmens 3 in jeder Rahmenecke durch Drehung der jeweiligen Nivellierschraube 14 eingestellt werden. Damit kann also der Rahmen 3 mit seiner Oberkante im Wesentlichen bündig zum Bodenbelag ausgerichtet werden. Ist dies erfolgt, so werden die gelockerten Fixationsschrauben 15 wieder angezogen. Diese Fixationsschrauben 15 verbinden den Rahmen 3 mit der Grundplatte 10, wofür in dieser Gewindebohrungen 16 für die Schrauben 15 vorgesehen sind. Durch das Anziehen der Fixationsschrauben 15 wird die Grundplatte 10 im Bereich der Fixationsschrauben 15 entsprechend geringfügig nach oben hin deformiert, was in Figur 9 in übertriebener Weise durch den mit der unterbrochene Linie 10' dargestellten Verlauf der Grundplatte 10 angedeutet ist. Die Verbiegung der Grundplatte 10 durch die ausserhalb der Ecken derselben angeordneten Fixationsschrauben 15 führt dazu, dass die Grundplatte an ihren Kanten 19' in den Ecken eine leichte Biegung nach unten erfährt und damit ein Reibschluss mit dem Flansch 17 entsteht, welcher die Grundplatte 10 in der gewählten X, Y und U Einstellung am Flansch 17 und damit am Tragrahmen 2 fixiert. Damit ist auch der Rahmen 3 in entsprechender Stellung am Tragrahmen 2 fixiert. Werden die Fixationsschrauben wieder gelockert, so dass die Grundplatte 10 elastisch zurückfedernd wieder ihre Normalstellung einnimmt, in welcher sie im Wesentlichen eben ist, so wird die Reibschlussverbindung zwischen der Grundplatte 10 und dem Flansch 17 wieder gelockert. Dadurch kann die bereits beschriebene Einstellung erneut erfolgen, sollte dies notwendig sein. Durch Anziehen der Fixationsschrauben 15 und entsprechende Deformation der Grundplatte wird die Reibschlussverbindung wieder fixiert. Natürlich könnten auch andere Fixationsmittel zwischen der Grundplatte 10 und dem Tragrahmen 2 vorgesehen werden, insbesondere formschlüssige Fixationsmittel. Besonders bevorzugt ist aber die gezeigte Ausführungsform, bei welcher die Fixationsmittel 15 sowohl die Grundplatte 10 am Tragrahmen fixieren können als auch den Rahmen 3 über die Nivelliermittel 14 mit der Grundplatte 10 verbinden.

## Patentansprüche

1. Bodendose (1), insbesondere für elektrische Installationen, mit einem zur Befestigung am Unterlagsboden bestimmten Tragrahmen (2) und einem den Dosendeckel (4) aufnehmenden Rahmen (3), wobei der Rahmen im Tragrahmen angeordnet und über Einstellmittel (5; 10-19') mit diesem verbunden ist, und wobei die Einstellmittel in einer Losestellung die Höheneinstellung des Rahmens gegenüber dem Tragrahmen, die horizontale Verschiebung des Rahmens im Tragrahmen und die Verdrehung des Rahmens um seine vertikale Mittelachse erlauben und in einer Fixierstellung den Rahmen am Tragrahmen fixieren.

2. Bodendose nach Anspruch 1, **dadurch gekennzeichnet, dass** die Einstellmittel eine im wesentlichen der Grundfläche des Rahmens entsprechende Grundplatte (10) umfassen, welche in Losestellung schwimmend am Tragrahmen gehalten und in Fixierstellung reibschlüssig oder formschlüssig am Rahmen fixiert ist.

3. Bodendose nach Anspruch 2, **dadurch gekennzeichnet, dass** die Grundplatte auf einem um eine Mittelausnehmung des Tragrahmens umlaufenden Flansch (17) aufliegt.

4. Bodendose nach Anspruch 2 oder 3, **dadurch gekennzeichnet, dass** die Grundplatte durch Haltemittel (11, 12, 13) in Vertikalrichtung am Tragrahmen festgelegt und in Losestellung in Horizontalrichtung verschiebbar ist.

5. Bodendose nach Anspruch 4, **dadurch gekennzeichnet, dass** die Haltemittel in der Grundplatte angeordnete Hülsen (11) umfassen, welche an einer Führung (18) im Tragrahmen anliegen.

6. Bodendose nach Anspruch 5, **dadurch gekennzeichnet, dass** die Hülsen ein Innengewinde aufweisen und Gewindebolzen (14) in den Hülsen vorgesehen sind, auf welchen der Rahmen (3) aufliegt.

7. Bodendose nach einem der Ansprüche 2 bis 6, **dadurch gekennzeichnet, dass** die Einstellmittel Fixierschrauben (15) umfassen, welche die Grundplatte in der Fixierstellung ausserhalb von deren Eckbereichen gegen den Rahmen ziehen und die Grundplatte verformen, derart, dass diese mindestens mit ihren Eckbereichen reibschlüssig am Tragrahmen angreift.

## Claims

1. Ground socket (1), in particular for electrical installations, with a support frame (2) designed for attachment to the bottom plate and a frame (3) for receiving the socket lid (4), wherein the frame is arranged in the support frame and is connected to it via adjusting means (5; 10-19'), and wherein the adjusting means in a loose position allow for the height adjusting of the frame with respect to the support frame, for the horizontal displacement of the frame within the support frame and for the rotation of the frame around its vertical centre axis and in a fixing position fix the frame at the support frame.

2. Ground socket according to claim 1, **characterized in that** the adjusting means comprise a ground plate (10) that basically corresponds to the base area of the frame, which in loose position is held floating at the support frame and in fixing position is fixed frictionally engaged or in a form-fitting manner at the frame.

3. Ground socket according to claim 2, **characterized in that** the ground plate rests on a flange (17) that surrounds a central recess of the support frame.

4. Ground socket according to claim 2 or 3, **characterized in that** the ground plate is fixed by holding means (11, 12, 13) in vertical direction at the support frame and in loose position can be displaced in horizontal direction.

5. Ground socket according to claim 4, **characterized in that** the holding means comprise bushes (11) that are arranged in the ground plate and that abut on a guide (18) in the support frame.

6. Ground socket according to claim 5, **characterized in that** the bushes have a female thread and that thread bolts (14) are provided within the bushes, upon which the frame (3) rests.

7. Ground socket according to one of the claims 2 to 6, **characterized in that** the adjusting means comprise fixing screws (15), that pull the ground plate in the fixing position outside of its corner regions against the frame and deform the ground plate such, that it at least with its corner regions frictionally engages with the support frame.

## Revendications

1. Boîte (1) à encastrer, notamment pour des installations électriques, comprenant un cadre (2) porteur destiné à être fixé à un fond et un cadre (3) recevant le couvercle (4) de la boîte, le cadre étant disposé dans le cadre porteur et y étant relié par des moyens (5, 10 à 19') de réglage et dans lequel les moyens de réglage permettent, dans une position de desserrage le réglage en hauteur du cadre par rapport au cadre porteur, le déplacement horizontal du cadre dans le cadre porteur et la rotation du cadre autour de son axe médian vertical et, dans une position d'immobilisation, immobilisent le cadre sur le cadre porteur.

2. Boîte à encastrer suivant la revendication 1, **caractérisée en ce que** les moyens de réglage comprennent une plaque (10) de base, qui correspond sensiblement à la surface de base du cadre et qui, en la position de desserrage, est montée flottante sur le cadre porteur et, en la position d'immobilisation, est immobilisée sur le cadre par coopération de frottement ou par complémentarité de forme.

3. Boîte à encastrer suivant la revendication 2, **caractérisée en ce que** la plaque de base repose sur une bride (17) entourant un évidement médian du cadre porteur.

4. Boîte à encastrer suivant la revendication 2 ou 3, **caractérisée en ce que** la plaque de base est fixée au cadre porteur dans la direction verticale par des moyens (12, 13) de maintien et peut coulisser dans la direction horizontale en la position de desserrage.

5. Boîte à encastrer suivant la revendication 4, **caractérisée en ce que** les moyens de maintien comprennent des douilles (13) montées dans la plaque de base et s'appliquant à un guidage (18) du cadre porteur.

6. Boîte à encastrer suivant la revendication 5, **caractérisée en ce que** les douilles ont un taraudage et il est prévu des tiges (14) filetées sur lesquelles s'applique le cadre (3).

7. Boîte à encastrer suivant l'une des revendications 2 à 6, **caractérisée en ce que** les moyens de réglage des vis (15) d'immobilisation, qui tirent la plaque de base dans la position d'immobilisation à l'extérieur de ses parties de coin contre le cadre et déforment la plaque de base de façon à ce que celle-ci attaque au moins par ses parties de coin le cadre porteur à frottement.
